# EUROPEAN PATENT APPLICATION

(11) **EP 1 614 925 A1**
(43) Date of publication of application: **11.01.2006**
(21) Application number: 05254284.2
(22) Date of filing: 07.07.2005
(51) Int. Cl.: F16D 69/02

(54) **Saturant for friction material containing friction modifying layer**

(30) Priority: 09.07.2004 US 888245
(71) Applicant: BorgWarner Inc., Auburn Hills MI 48326 (US)
(72) Inventor: Chen, Yih-Fang, Lisle Illinois 60532 (US); Lam, Robert C., Rochester Michigan 48306 (US); Dong, Feng, Rochester Michigan 48306 (US); Denes, Robert, Des Plaines Illinois 60018 (US); Chavdar, Bulent, Rochester Michigan 48306 (US)
(74) Representative: Lerwill, John

(57) **Abstract**

The present invention relates to a saturant for a base material comprising at least one type of curable resin material and at least one type of friction modifying material. The resin material and the friction modifying material form a matrix such that the resin material is substantially uniformly dispensed throughout the base material while a desired high amount of the friction modifying materials are coated.

## Description

### TECHNICAL FIELD

The present invention relates to a saturant for a fiction material which includes at least one type of friction modifying particles in the saturant itself. The friction material of the present invention has high coefficient of friction characteristics and extremely high heat resistance. The friction material also has improved strength, wear resistance and noise resistance.

### BACKGROUND ART

New and advanced continuous torque transmission systems, having continuous slip torque converters and shifting clutch systems are being developed by the automotive industry. These new systems often involve high energy requirements. Therefore, the friction materials technology must be also developed to meet the increasing energy requirements of these advanced systems.

In particular, a new high performance, durable friction material is needed. The new friction material must be able to withstand high speeds wherein surface speeds are up to about 65m/seconds. Also, the friction material must be able to withstand high facing lining pressures up to about 1500 psi. It is also important that the friction material be useful under limited lubrication conditions.

The friction material must be durable and have high heat resistance in order to be useful in the advanced systems. Not only must the friction material remain stable at high temperatures, it must also be able to rapidly dissipate the high heat that is being generated during operating conditions.

The high speeds generated during engagement and disengagement of the new systems mean that a friction material must be able to maintain a relatively constant friction throughout the engagement. It is important that the frictional engagement be relatively constant over a wide range of speeds and temperatures in order to minimize "shuddering" of materials during braking or the transmission system during power shift from one gear to another. It is also important that the friction material have a desired torque curve shape so that during frictional engagement the friction material is noise or "squawk" free.

In particular, transmission and torque-on-demand systems incorporate slipping clutches mainly for the fuel efficiency and driving comfort. The role of the slip clutch within these systems varies from vehicle launching devices, such as wet start clutches, to that of a torque converter clutches. According to the operating conditions, the slip clutch can be differentiated into three principle classes: (1) Low Pressure and High Slip Speed Clutch, such as wet start clutch; (2) High Pressure and Low Slip Speed Clutch, such as Converter Clutch; and (3) Extreme Low Pressure and Low Slip Speed Clutch, such as neutral to idle clutch.

The principal performance concerns for all applications of the slip clutch are the prevention of shudder and the energy management of the friction interface. The occurrence of shudder can be attributed to many factors including the friction characteristics of the friction material, the mating surface's hardness and roughness, oil film retention, lubricant chemistry and interactions, clutch operating conditions, driveline assembly and hardware alignment, and driveline contamination. The friction interface energy management is primarily concerned with controlling interface temperature and is affected by the pump capacity, oil flow path and control strategy. The friction material surface design also contributes to the efficiency of interface energy management.

Previously, asbestos fibers were included in the friction material for temperature stability. Due to health and environmental problems, asbestos is no longer being used. More recent friction materials have attempted to overcome the absence of the asbestos in the friction material by modifying impregnating paper or fiber materials with phenolic or phenolic-modified resins. These friction materials, however, do not rapidly dissipate the high heat generated, and do not have the necessary heat resistance and satisfactory high coefficient of friction performance now needed for use in the high speed systems currently being developed.

The Kearsey U.S. Patent No. 5,585,166 describes a multi layer friction lining having a porous substrate layer (cellulose and synthetic fibers, filler and thermoset resin) and a porous friction layer (nonwoven synthetic fibers in a thermoset resin) where the friction layer has a higher porosity than the substrate layer.

The Seiz U.S. Patent No. 5,083,650 reference involves a multi-step impregnating and curing process; i.e., a paper impregnated with a coating composition, carbon particles are placed on the paper, the coating composition in the paper is partially cured, a second coating composition is applied to the partially cured paper, and finally, both coating compositions are cured.

Various paper based fibrous materials have been developed that are co-owned by the assignee herein, BorgWarner Inc., for use in friction materials. These references, and all references mentioned herein, are fully incorporated herein by reference.

In particular, Lam et al., U.S. Patent No. 5,998,307 relates to a friction material having a primary fibrous base material impregnated with a curable resin where the porous primary layer comprises at least one fibrous material and a secondary layer comprises carbon particles covering at least about 3 to about 90% of the surface of the primary layer.

The Lam et al., U.S. Patent No. 5,858,883 relates to a base material having a primary layer of less fibrillated aramid fibers, synthetic graphite, and a filler, and a secondary layer comprising carbon particles on the surface of the primary layer.

The Lam et al., U.S. Patent No. 5,856,224 relates to a friction material comprising a base impregnated with a curable resin. The primary layer comprises less fibrillated aramid fibers, synthetic graphite and filler; the secondary layer comprises carbon particles and a retention aid.

The Lam et al. U.S. Patent No. 5,958,507 relates to a process for producing a friction material where about 3 to about 90% of at least one surface of the fibrous material which comprises less fibrillated aramid fibers is coated with carbon particles.

The Lam, U.S. Patent No. 6,001,750 relates to a friction material comprising a fibrous base material impregnated with a curable resin. The porous primarily layer comprises less fibrillated aramid fibers, carbon particles, carbon fibers, filler material, phenolic novoloid fibers, and optionally, cotton fibers. The secondary layer comprises carbon particles which cover the surface at about 3 to about 90% of the surface.

Yet another commonly owned patent application, Serial No. 09/707,274 relates to a paper type friction material having a porous primary fibrous base layer with friction modifying particles covering about 3 to about 90% of the surface area of the primary layer.

In addition, various paper type fibrous base materials are described in commonly owned BorgWarner Inc. Lam et al., U.S. Patent Nos. 5,753,356 and 5,707,905 which describe base materials comprising less fibrillated aramid fibers, synthetic graphite and filler, which references are also fully incorporated herein by reference.

Another commonly owned patent, the Lam, U.S. Patent No. 6,130,176, relates to non-metallic paper type fibrous base materials comprising less fibrillated aramid fibers, carbon fibers, carbon particles and filler.

Other commonly owned and copending patent applications, Ser. Nos. 10/233,318 filed Aug. 30, 2002; 10/234,976 filed Sept. 4, 2002; and 10/218,091 filed Aug. 13, 2002 relate to improved friction materials, but until the present application, no one had claimed an improved saturant itself.

For all types of friction materials, in order to be useful in "wet" applications, the friction material must have a wide variety of acceptable characteristics. The friction material must have good anti-shudder characteristics; have high heat resistance and be able to dissipate heat quickly; and, have long lasting, stable and consistent frictional performance. If any of these characteristics are not met, optimum performance of the friction material is not achieved.

It is also important that a suitable impregnating resin be used in the friction material in order to form a high energy application friction material. The friction material must have good shear strength during use when the friction material is infused with brake fluid or transmission oil during use.

As far as is known, there is no disclosure of a saturant for friction material for use in transmission systems which includes a curable resin material having a high percent of friction modifying materials therein. Further, as far as in known, there is no disclosure of such saturant material forming a layer of friction modifying particles as a top surface on the friction material.

Accordingly, it is an object of the present invention to provide an improved saturant for a friction material to provide such friction material with reliable and improved properties compared to those of the prior art.

A further object of this invention is to provide a saturant which gives friction materials improved "anti-shudder", "hot spot" resistance, high heat resistance, high friction stability and durability, and strength.

### IN THE DRAWINGS

Fig. 1a is a schematic diagram showing a friction material having a fibrous base material and at least one type of friction modifying particle forming a top layer which was formed using a saturant that contains friction modifying materials.
Fig. 1b and 1c are SEM images. Fig. 1b shows an Ex. 1 of a friction material comprising a base material and a saturant material having friction modifying materials therein and Fig. 1c shows Compar. C.
Figs. 2a-2d are SEM images of deposit surfaces at 500 magnification; Fig. 2a shows Compar. A; Fig. 2b shows Compar. B; Fig. 2c shows Compar. C and Fig. 2d shows Ex. 1.
Figs. 3a-d are SEM images of deposit surface at 100 magnification, Figs. 3a and 3b show Compar. C; Figs. 3c and 3d show Ex. 1.
Fig. 4 is a series of graphs that show wet start clutch bench evaluations at cycles 10, 50, 100, 500, 1000, 2000, 3000, and 4000 for Compar. C.
Fig. 5 is a series of graphs that show wet start clutch bench evaluations at cycles 10, 50, 100, 500, 1000, 2000, 3000, and 4000 for Ex. 1.
Figs. 6a-d are graphs that show the T-N for Ex. 1 and Compar. C in grooved materials showing the midpoint coefficient of friction.
Fig. 7 is a graph that shows the slope versus slipping time for Ex. 1 and Compar. C for mold grooved materials.
Fig. 8 is a schematic diagram of a friction material having a top layer of regular geometrical friction modifying materials.
Fig.9 is an SEM image showing the round disks of the regular shaped celite friction modifying particles on a base material.
Fig. 10 is a graph that shows the µ-v slope versus slipping time for Compar. A' and Compar. C'.
Fig. 11a is a graph that shows the low oil flows data, for Compar. A'; Fig. 11b is a graph that shows the low oil flow data for the Ex. 2 as having very good anti-shudder characteristics.
Figs. 12a and 12b are optical views of a sliced sample of the Ex. 2 material at 80 microns per layer; Fig 12a shows the front view, and Fig. 12b shows the back view.
Figs. 13a and 13b are optical views of a sliced sample of the Ex. 2 material at 100 microns per layer; Fig 13a shows the front view, and Fig. 13b shows the back view
Fig. 14a is a schematic diagram showing a prior art friction material having a fibrous base and friction modifying particle.
Figs.14b-14e are schematic diagrams showing relative sizes of particles: Fig: 14b -typical fiber diameter of 10-15 micrometers; Fig. 14c - typical average size of diatom particle of 10-20 micrometers; Fig. 14d nanoparticle size of 0.01 micrometers. Fig. 14e is a schematic illustration of a fiber having nanoparticles on the surface of the fiber.
Fig. 15a is a SEM image of a nanoparticle friction material of the present invention at 5000 magnification; Fig. 15b is a SEM image of a nanoparticle friction material of the present invention at 500 magnification.
Figs. 16a-16d are a series of graphs showing wet start clutch bench evaluations at cycles 10, 50, 100, 500, 1000, 2000, 3000, and 4000 for the friction material of the present invention (open circle line: Example 3 (showing one optimized concentration of nanoparticles on surface) and closed square shape line: comparative friction material): Fig. 16a.- shows the initial friction coefficient; Fig. 16b-shows the mid friction coefficient; Fig. 16c - shows the end friction coefficient; Fig. 16d - shows the end/mid ratio.
Fig. 17 is a graph showing S31 Test Results comparing the friction coefficient versus velocity (rpm) for:
   initial coefficient - comparative material (closed circle);
   initial coefficient - Example 3 (closed square);
   after bench test -comparative material (open circle); and
   after bench test - Example 3 invention (open square).

### SUMMARY OF THE INVENTION

The present invention relates to a saturant for friction materials. In particular, the saturant is used to saturate a fibrous base material such that a layer of friction modifying particle is formed as a top surface on the base material. The composition of the saturant allows a matrix of resin and friction modifying particles to be formed when the saturant is applied to the base material. The matrix is formed such that the resin material is substantially uniformly dispersed throughout the base material while a plurality of the friction modifying materials are deposited as a coating on a top surface of the base material.

In certain embodiments, a desired amount of friction modifying particles is used in the saturant such that the top layer has an average thickness of about 30-200 µm and the top layer has a permeability lower than the first layer. In such embodiments, the layer of the friction modifying particles can have a preferred thickness of about 60 to about 100 µm.

In other embodiments, the saturant contains a desired amount of friction modifying particles such that the top layer has a permeability substantially similar to the base material.

The saturant of the present invention allows the friction modifying particles to be deposited on individual fibers or, if a nonwoven material, on randomly spaced portions of the surface of the base material. The use of such saturant provides a friction material having a porous or lofty and open structure. The friction material has extremely good heat resistance and coefficient of friction characteristics which allows the friction material to respond well under thermal and mechanical stresses.

In another embodiment, when the base material is saturated with the saturant, the saturant allows a "macro porous" characteristic to be retained by the fibrous base material. In such embodiments, the fibrous base material has a surface which is partially uncovered by the friction modifying materials. The large pores allow the friction modifying materials to settle into the voids or interstices in the base material. In the macro porous friction material of the present invention, the large pores allow contaminants in the fluid to pass through readily.

Also, in certain embodiments, the saturant includes desired friction modifying particles that have an average size from about 0.1 to about 80 microns, and in certain embodiments, have an average size from about 0.5 to about 20 microns, and in certain other embodiments, from about 0.1 to about 0.15 microns. The fibrous base material can have an average voids volume from about 50% to about 85%.

In certain preferred embodiments, the friction modifying particles in the saturant comprise silica particles such as celite particles, diatomaceous earth, and/or a mixture of carbon particles and silica particles.

### DETAILED DESCRIPTION OF INVENTION

In order to achieve the requirements discussed above, many types of saturants for friction materials were evaluated for friction and heat resistant characteristics under conditions similar to those encountered during operation. Commercially available saturants for friction materials were investigated and proved not to be suitable for use in high-energy applications.

According to one the present invention, when a friction material having a fibrous base material is impregnated with the saturant of the present invention, a substantially uniform layer of friction modifying materials is formed on a top or outer surface of the fibrous base material. In certain aspects, the fibrous base material layer is more porous than the top layer of the friction modifying particles. Also, in one particular aspect of the present invention, the top layer has a lower permeability in both the radial and normal directions than the fibrous base material layer. In one aspect of the present invention, the fibrous base material average voids volume from about 50% to about 85%. In certain embodiments, the fibrous base material has an average pore/void/interstice diameter of about 5 µm.

Further, in certain embodiments, the saturant comprises a predetermined amount of friction modifying particles that include silica, celite particles, and in certain other embodiments, diatomaceous earth. In one particular aspect of the present invention, the friction modifying particles comprise celite having an irregular shape. In still other embodiments, the friction modifying particles can comprise a mixture of carbon particles and silica particles. In still other embodiments, the friction modifying particles can also include other friction modifying particles such as metal oxides, nitrides, carbides, and mixtures thereof. It is within the contemplated scope of the present invention that these embodiments can include, for example, silica oxides, iron oxides, aluminum oxides, titanium oxides and the like; silica nitrides, iron nitrides, aluminum nitrides, titanium nitrides and the like; and, silica carbides, iron carbides, aluminum carbides, titanium carbides and the like.

Various fibrous base materials can be saturated with the saturant of the present invention, including, for example, non-asbestos fibrous base materials comprising, for example, fabric materials, woven and/or nonwoven materials. Suitable fibrous base materials include, for example, fibers and fillers. The fibers can be organic fibers, inorganic fibers and carbon fibers. The organic fibers can be aramid fibers, such as fibrillated and/or nonfibrillated aramid fibers, acrylic fibers, polyester fibers, nylon fibers, polyamide fibers, cotton/cellulose fibers and the like. The fillers can be, for example, silica, diatomaceous earth, graphite, alumina, cashew dust and the like.

In other embodiments, the fibrous base material can comprise fibrous woven materials, fibrous non-woven materials, and paper materials. Further, examples of the various types of fibrous base materials useful in the present invention are disclosed in the above-referenced BorgWarner U.S. patents which are fully incorporated herein by reference. It should be understood however, that other embodiments of the present invention can include yet different fibrous base materials.

In certain embodiments, the friction material comprises a fibrous base material which has a plurality of voids or interstices therein. The size of the voids in the fibrous base material can range from about 0.5 µm to about 20 µm.

In certain embodiments, the fibrous base material preferably has a void volume of about 50 to about 60% such that the fibrous base material is considered "dense" as compared to a "porous" woven material.

In certain embodiments, saturant material further comprises a resin material which at least partially fills the voids in the fibrous base material. The resin material is substantially uniformly dispersed throughout the thickness of the fibrous base material.

Thus, in certain embodiments, the friction material impregnated with the saturant of the present invention has a top, or second, layer of friction modifying particles on a first, or top, surface of the fibrous base material. The presence of the friction modifying materials as a top layer on the fibrous base material provides the friction material with many advantageous properties, including good oil retention properties.

In certain embodiments, the fibrous base material comprises a fibrous base material where less fibrillated fibers and carbon fibers are used in the fibrous base material to provide a desirable pore structure to the friction material. The fiber geometry not only provides increased thermal resistance, but also provides delamination resistance and squeal or noise resistance. Also, in certain embodiments, the presence of the carbon fibers and carbon particles aids in the fibrous base material in increasing the thermal resistance, maintaining a steady coefficient of friction and increasing the squeal resistance. A relatively low amount of cotton fibers in the fibrous base material can be included to improve the friction material's clutch "break-in" characteristics.

The use of less fibrillated aramid fibers and carbon fibers in a fibrous base material improves the friction material's ability to withstand high temperatures. Less fibrillated aramid fibers generally have few fibrils attached to a core fiber. The use of the less fibrillated aramid fibers provides a friction material having a more porous structure; i.e., there are larger pores than if a typical fibrillated aramid fiber is used. The porous structure is generally defined by the pore size and liquid permeability. In certain embodiments, the fibrous base material defines pores ranging in mean average size from about 2.0 to about 25 microns in diameter, and in certain embodiments, from about 2 to about 10 microns. In certain embodiments, the mean pore size ranges from about 2.5 to about 8 microns, and in certain embodiments from about 5 to about 8 microns, in diameter and the friction material had readily available air voids of at least about 50% and, in certain embodiments, at least about 60% or higher.

Also, in certain embodiments, it is desired that the aramid fibers have a length ranging from about 0.5 to about 10 mm and a Canadian Standard Freeness (CSF) of greater than about 300. In certain embodiments, it is also desired to use less fibrillated aramid fibers which have a CSF of about 450 to about 550 preferably about 530 and greater; and, in other certain embodiments, about 580-650 and above and preferably about 650 and above. In contrast, more fibrillated fibers, such as aramid pulp, have a freeness of about 285-290.

The "Canadian Standard Freeness" (T227 om-85) means that the degree of fibrillation of fibers can be described as the measurement of freeness of the fibers. The CSF test is an empirical procedure which gives an arbitrary measure of the rate at which a suspension of three grams of fibers in one liter of water may be drained. Therefore, the less fibrillated aramid fibers have higher freeness or higher rate of drainage of fluid from the friction material than more fibrillated aramid fibers or pulp. Friction materials comprising the aramid fibers having a CSF ranging from about 430-650 (and in certain embodiments preferably about 580-640, or preferably about 620-640), provide superior friction performance and have better material properties than friction materials containing conventionally more fibrillated aramid fibers. The longer fiber length, together with the high Canadian freeness, provide a friction material with high strength, high porosity and good wear resistance. The less fibrillated aramid fibers (CSF about 530-about 650) have especially good long-term durability and stable coefficients of friction.

Various fillers are also useful in the primary layer of the fibrous base material of the present invention. In particular, silica fillers, such as diatomaceous earth, are useful. However, it is contemplated that other types of fillers are suitable for use in the present invention and that the choice of filler depends on the particular requirements of the friction material.

In certain embodiments, cotton fiber is added to the fibrous base material of the present invention to give the fibrous material higher coefficients of friction. In certain embodiments, about 5 to about 20%, and, in certain embodiments, about 10% cotton can also be added to the fibrous base material.

One example of a formulation for the primary layer of a fibrous base material as described in the above incorporated by reference U.S. Patent No. 6,130,176, which comprises about 10 to about 50%, by weight, of a less fibrillated aramid fiber; about 10 to about 35%, by weight, of activated carbon particles; about 5 to about 20%, by weight, cotton fibers, about 2 to about 15%, by weight, carbon fibers; and, about 10 to about 35%, by weight of a filler material.

In certain other embodiments, one particular formulation has found to be useful comprises about 35 to about 45%, by weight, less fibrillated aramid fibers; about 10 to about 20%, by weight, activated carbon particles; about 5 to about 15% cotton fibers; about 2 to about 20%, by weight, carbon fibers; and, about 25 to about 35%, by weight, filler.

In still other embodiments, the base material comprises from about 15 to about 25% cotton, about 40 to about 50% aramid fibers, about 10 to about 20% carbon fibers, about 5 to about 15% carbon particles, about 5 to about 15% celite, and, optionally about 1 to about 3% latex add-on.

When the fibrous base material has a higher mean pore diameter and fluid permeability, the friction material is more likely to run cooler or with less heat generated in a transmission due to better automatic transmission fluid flow throughout the porous structure of the friction material. During operation of a transmission system, the fluid tends, over time, to breakdown and form "oil deposits", especially at high temperatures. These "oil deposits" decrease the pore openings. Therefore, when the friction material initially starts with lager pores, there are more open pores remaining during the useful life of the friction material.

The friction modifying particles on the top surface of the fibrous base material provides an improved three-dimensional structure to the resulting friction material.

The layer of oil or fluid on the top friction modifying particle layer keeps the oil film on the surface, thus making it more difficult for the oil or fluid to initially penetrate into the friction material. The top friction modifying material layer holds the fluid lubricant on the surface and increases the oil retaining capacity of the friction material. The friction material of the present invention thus allows an oil film to remain on its surface. This also provides good coefficient of friction characteristics and good slip durability characteristics.

In certain embodiments, the average area of coverage of friction modifying particles forming the top layer is in the range of about 80 to about 100% of the surface area. In certain other embodiments, the average area of coverage ranges from about 90 to about 100%. The friction modifying particles substantially remain on the top surface of the base material at a preferred average thickness of about 35 to about 200 µm. In certain embodiments, the top layer has a preferred average thickness of about 60 to about 100 microns.

The uniformity of the deposited layer of the friction modifying particles on the surface of the fibrous base material is achieved by using a size of the particles that can range from about 0.1 to about 80 microns in diameter, and in certain embodiments from about 0.5 to about 20 microns, and in other certain embodiments from about 0.1 to about 0.5 microns. In certain embodiments, the particles have an average particle diameter of about 12 µm. In certain embodiments, it has been discovered that if the friction modifying particle size is too large or too small, a desired optimum three-dimensional structure not achieved and, consequently, the heat dissipation and antishudder characteristics are not as optimum.

The amount of coverage of friction modifying particles on the fibrous base material is sufficiently thick such that the layer of friction modifying particles has a three dimensional structure comprised of individual particles of the friction modifying material and voids or interstices between the individual particles. In certain embodiments, the top layer (of friction modifying particles) is less porous than the lower layer (of the fibrous base material).

Various types of friction modifying particles are useful in the friction material. In one embodiment, useful friction modifying particles include silica particles. Other embodiments can have friction modifying particles such as resin powders such as phenolic resins, silicone resins epoxy resins and mixtures thereof. Still other embodiments can include partial and/or fully carbonized carbon powders and/or particles and mixtures thereof; and mixtures of such friction modifying particles. In certain embodiments, silica particles such as diatomaceous earth, Celite®, Celatom®, and/or silicon dioxide are especially useful. The silica particles are inexpensive inorganic materials which bond strongly to the base material. The silica particles provide high coefficients of friction to the friction material. The silica particles also provide the base material with a smooth friction surface and provides a good "shift feel" and friction characteristics to the friction material such that any "shudder" is minimized.

In certain embodiments, the friction modifying materials in the saturant of the present invention can have an irregular shape. The irregular shaped friction modifying particles act to hold a desired quantity of lubricant at the surface of the fibrous base material due to the capillary action of many invaginations on the surface of the irregularly shaped friction modifying particle. In certain embodiments, a silica material such as celite is useful as a friction modifying material since celite has an irregular or rough surface.

In other aspects, friction modifying materials used in the saturant of the present invention can have a preferred geometry, such as a symmetrical geometric shape. The symmetrically geometric shaped friction modifying particles act to hold a quantity of lubricant at the friction surface and to create channels of oil flow across the friction surface due to the micro hard solid regular mountain-valley type surface topography of the stacking layers of symmetrically shaped friction modifying particles. In certain embodiments, celite is useful as a friction modifying material since celite typically has a symmetrical shape. In use, the layer of oil or fluid on the top, geometrically shaped friction modifying particle layer keeps the oil flow film on the surface, thus making it more difficult for the oil or fluid to initially penetrate into the friction material. The top friction modifying material layer holds the fluid lubricant on the surface and increases the oil retaining capacity of the friction material. This oil film remaining on the surface of the friction material provides good coefficient of friction characteristics and good slip durability characteristics to the friction material.

According to one aspect of the present invention, the friction material is prepared by mixing a saturant material comprising a mixture of at least one curable resin material and at least one type friction modifying particle, preparing a porous base material having a plurality of interstices dispersed therethrough, and saturating the porous base material with the saturant material whereby a plurality of the friction modifying particles is at least partially deposited on individual fibers comprising the base material and whereby the resin material is substantially evenly dispersed throughout the base material. In certain embodiments, the friction modifying particles form a porous top layer on at least one side of the base material.

In certain other embodiments, the saturant causes the fibrous material to have a surface which is partially uncovered by the friction modifying materials. The large pores allow the friction modifying materials to settle into the voids or interstices in the base material. In a macro porous friction material, the large pores allow contaminants in the fluid to pass through readily. As lubrications deteriorate over time, debris is generated. The friction material of the present invention keeps the friction behavior of the friction material constant.

In still other embodiments, the saturant can include nanoparticle-sized friction modifying particles. The nanoparticle-sized friction modifying particles have an average diameter size from about 10 nm to about 150 nm. In certain embodiments, the nanoparticle layer covers about 3 to about 99%, by area, of the base material, and in other embodiments, the nanoparticles cover about 3 to about 20%, by area, of the base material.

Further, in certain embodiments, the nanoparticles at least partially cover the individual fiber and/or filler ingredients of the base material. A layer of nanoparticles is deposited on the fibrous friction base material such that the base fibrous layer can be completely covered with nanoparticles. In other nanoparticle saturated friction materials the individual fiber and/or filler ingredients are partially covered with nanoparticles. In either embodiment, the nanoparticles penetrate into the interior structure and adhere on the fiber and/or filler ingredients of the base material.

While not wishing to be bound by theory, it is believed that the nanoparticles, when adhered to the fibers and/or fillers of the base material, provide additional mechanical strength and an increase in the friction characteristics to the friction material. The nanoparticles adhere to the surface of the fibers and/or fillers present in the base material due to their extremely small size and due to the relatively large surface area provided by the fibers/fillers themselves in comparison to the nanoparticles. The extremely small size of the nanoparticles, in comparison to the fibers/fillers in the base material, allows the nanoparticles to be substantially evenly distributed over the surface of the ingredients (i.e., for example, the fibers and/or fillers) of the base material.

One advantage of the saturant which deposits such nanoparticles onto the surface is that the friction performance of the resulting friction material is enhanced (e.g. higher coefficients of friction; better mu-v slope, and the like).

In certain embodiments the nanoparticles form clusters of nanoparticles such that the top layer of the nanoparticle friction modifying particles forms a dense, or substantially nonporous layer that has a lower permeability in both the radial and normal directions than the base layer. The lower permeability of the top layer of the nanoparticle friction modifying particles causes the friction material to retain a desired amount of fluid on the top surface.

According to another aspect, the top layer of the nanoparticle friction modifying particles forms an open, or substantially porous, layer that has a higher permeability than the base material layer. The higher permeability of the top layer of the nanoparticle friction modifying particles still allows the friction material to retain a desired amount of fluid on the top surface of the friction material while providing the friction material with desired characteristics.

Thus, yet another aspect of the present invention relates to a friction material having the novel microstructured surfaces (i.e., the "dense" or "porous" nanoparticle surfaces), as described above. These nanoparticle, or microstructured-surface, friction materials have a desired high coefficient of friction, more robust anti-shudder characteristics, and extremely high heat resistance.

In certain embodiments, the saturant of the present invention is useful to form a friction material having a porous or lofty and open base material. The friction material has a desired low density and has a fiber architecture which allows a resin material to soak into the friction material. The friction material has extremely good heat resistance and coefficient of friction characteristics which allows the friction material to respond well under thermal and mechanical stresses.

In certain embodiments, the saturant can comprise different resin systems. In certain embodiments, it is useful to use at least one phenolic resin, at least one modified phenolic-based resin, at least one silicone resin, at least one modified silicone resin, at least one epoxy resin, at least one modified epoxy resin, and/or combinations of the above. In certain other embodiments, a silicone resin blended or mixed with a phenolic resin in compatible solvents is useful.

Various resins are useful in the present invention. In certain embodiments, the resin can comprise phenolic or phenolic based resins, preferably so that the saturant material comprises about 45 to about 65 parts, by weight, per 100 parts, by weight, of the friction material.

After the saturant comprising a suitable resin and friction modifying particle mixture has been applied to the fibrous base material and the fibrous base material has been impregnated with the saturant, the impregnated fibrous base material is heated to a desired temperature for a predetermined length of time to form a friction material. In certain embodiments, the heating cures the phenolic resin present in the saturant at a temperature of about 300°F. When other resins are present in the saturant, such as a silicone resin, the heating cures the silicone resin at a temperature of about 400°F. Thereafter, the cured friction material is adhered to a desired substrate by suitable means.

Various useful resins include phenolic resins and phenolic-based resins. It is to be understood that various phenolic-based resins which include in the resin blend other modifying ingredients, such as epoxy, butadiene, silicone, tung oil, benzene, cashew nut oil and the like, are contemplated as being useful with the present invention. In the phenolic-modified resins, the phenolic resin is generally present at about 50% or greater by weight (excluding any solvents present) of the resin blend. However, it has been found that friction materials, in certain embodiments, can be improved when the resin mixture includes resin blend containing about 5 to about 80%, by weight, and for certain purposes, about 15 to about 55%, and in certain embodiments about 15 to about 25%, by weight, of silicone resin based on the weight of the silicone-phenolic mixture (excluding solvents and other processing acids).

Examples of useful phenolic and phenolic-silicone resins useful in the present invention are fully disclosed in the above-referenced BorgWarner U.S. patents which are fully incorporated herein, by reference. Silicone resins useful in the present invention include, for example, thermal curing silicone sealants and silicone rubbers. Various silicone resins are useful with the present invention. One resin, in particular, comprises xylene and acetylacetone (2,4-pentanedione). The silicone resin has a boiling point of about 362°F (183°C), vapor pressure at 68°F mm, Hg: 21, vapor density (air=1) of 4.8, negligible solubility in water, specific gravity of about 1.09, percent volatile, by weight, 5% evaporation rate (ether=1), less than 0.1, flash point about 149°F (65°C) using the Pensky-Martens method. It is to be understood that other silicone resins can be utilized with the present invention. Other useful resin blends include, for example, a suitable phenolic resin comprises (% by wt.): about 55 to about 60% phenolic resin; about 20 to about 25% ethyl alcohol; about 10 to about 14% phenol; about 3 to about 4% methyl alcohol; about 0.3 to about 0.8% formaldehyde; and, about 10 to about 20% water. Another suitable phenolic-based resin comprises (% by wt.): about 50 to about 55% phenol/formaldehyde resin; about 0.5% formaldehyde; about 11 % phenol; about 30 to about 35% isopropanol; and, about 1 to about 5% water.

It has also been found that another useful resin is an epoxy modified phenolic resin which contains about 5 to about 25 percent, by weight, and preferably about 10 to about 15 percent, by weight, of an epoxy compound with the remainder (excluding solvents and other processing aids) phenolic resin. The epoxy-phenolic resin compound provides, in certain embodiments, higher heat resistance to the friction material than the phenolic resin alone.

In certain embodiments, it is preferred that resin mixture comprises desired amounts of the resin and the friction modifying particles such that the target pick up of resin by the fibrous base material ranges from about 25 to about 70%, in other embodiments, from about 40 to about 65%, and, in certain embodiments, about 60 to at least 65%, by weight, total silicone-phenolic resin.

In certain embodiments, the resin mixture can comprise both the silicone resin and the phenolic resin which are present in solvents which are compatible to each other. These resins are mixed together (in preferred embodiments) to form a homogeneous blend and then used to saturate the fibrous base material. In certain embodiments, there is not the same effect if the fibrous base material is impregnated with a phenolic resin and then a silicone resin is added thereafter or vice versa. There is also a difference between a mixture of a silicone-phenolic resin solution, and emulsions of silicone resin powder and/or phenolic resin powder. When silicone resins and phenolic resins are in solution they are not cured at all. In contrast, the powder particles of silicone resins and phenolic resins are partially cured. The partial cure of the silicone resins and the phenolic resins inhibits a good saturation of the base material.

In certain embodiments the saturant can comprise a blend of a silicone resin in a solvent which is compatible with the phenolic resin and its solvent. In one embodiment, isopropanol has been found to be an especially suitable solvent. It is to be understood, however, that various other suitable solvents, such as ethanol, methyl-ethyl ketone, butanol, isopropanol, toluene and the like, can be utilized in the practice of this invention. The presence of a silicone resin, when blended with a phenolic resin and used to saturate the fibrous base material, causes the resulting friction materials to be more elastic than fibrous base materials impregnated only with a phenolic resin. When pressures are applied to the silicone-phenolic resin blended impregnated friction material of the present invention, there is a more even distribution of pressure which, in turn, reduces the likelihood of uneven lining wear. After the silicone resin and phenolic resin are mixed together with the friction modifying particles, the mixture is used to impregnate the fibrous base material.

It further contemplated that other ingredients and processing aids known to be useful in both preparing resin blends and in preparing fibrous base materials can be included in the saturant, and are within the contemplated scope of the present invention.

After the fibrous base material is saturated with the saturant of the present invention, the fibrous base material is cured for a period of time (in certain embodiments for about 1/2 hour) at temperatures ranging between 300-400°C to cure the resin binder and form the friction material.

The friction material formed using the saturant of the present invention includes a layer of friction modifying particles on a top surface of a fibrous base material. The friction material has good anti-shudder characteristics, high resistance, high coefficient of friction, high durability, good wear resistance and improved break-in characteristics.

The following examples provide further evidence that the gradient of friction modifying particles within the friction material of the present invention provides an improvement over conventional friction materials. The friction materials have desirable coefficient of friction, heat resistance and durability characteristics. Various preferred embodiments of the invention are described in the following examples, which however, are not intended to limit the scope of the invention.

### Examples

### Example I

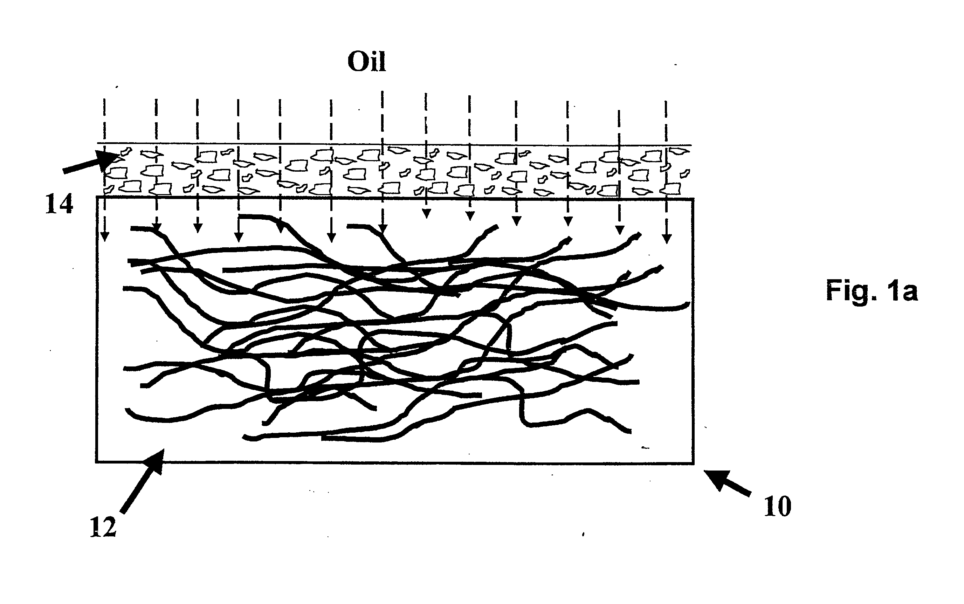

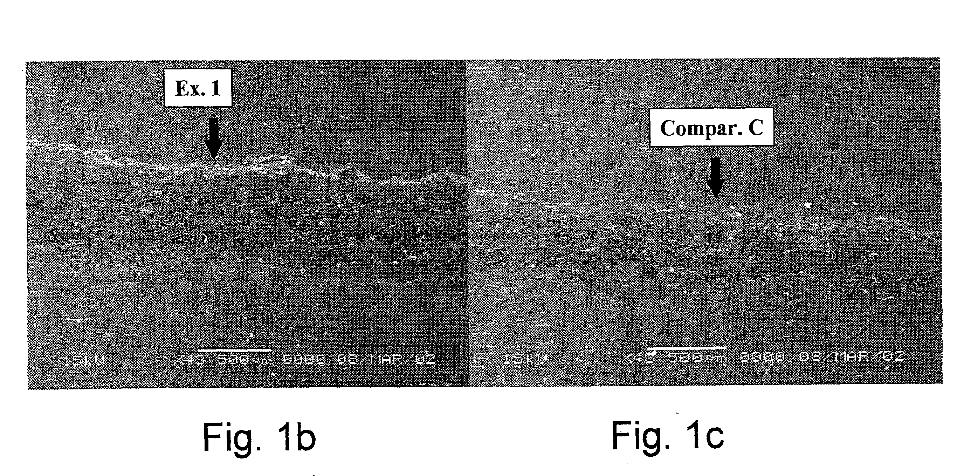

Fig. 1 a shows a schematic diagram of a friction material 10 saturated with a saturant of the present invention and comprising a fibrous base material 12 and a layer of surface friction modifying materials 14 substantially covering the fibrous base material 12.

Fig. 1 b shows an SEM image of a deposit material comprising celite for Example 1 where the friction modifying materials are deposited as a layer on a fibrous base material. Fig. 1 c shows a comparative example, Compar. C, where the friction modifying materials are not present as a layer but rather as an incomplete coating on the fibrous base material.

In the Compar. C, the friction material has many large holes such that at least some of the lubricant does not stay on the surface of the friction material. The friction particles in the Compar. C penetrate deeper into the fibrous base material such that surface pores remain fairly open.

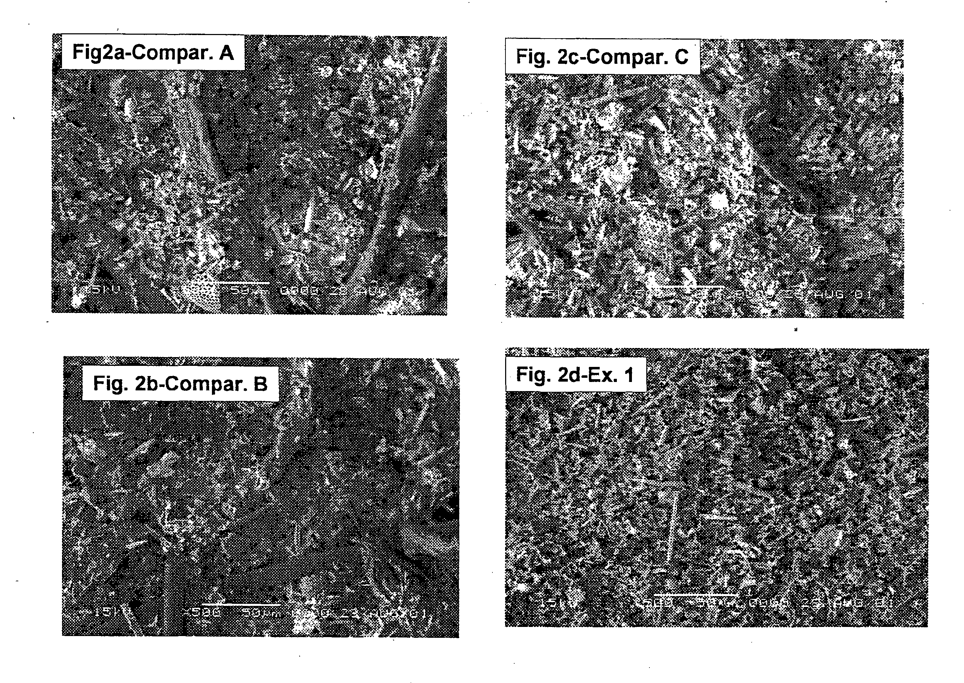

Figs. 2a-d are SEM images. Fig. 2a shows a comparative example, Compar. A, which is a commercial friction material formulation. Fig. 2a shows that there is an incomplete fibrous coverage of the fibrous base material and shows underlying fibers of the fibrous base material.

Fig. 2b shows Compar. B, another commercially produced friction product. Fig. 2b shows incomplete coverage of the fibrous base material and shows the underlying fibers of the fibrous base material.

Compar. C shown in Fig. 2c is another commercially produced friction product having a fibrous base material. The material is very porous and the fibers and filler underneath the layer of friction modifying particles can be seen.

Example 1, shown in Fig. 2d, is a friction material saturated with a saturant of the present invention which shows a layer of the friction modifying particles on a top surface of the fibrous base material. The layer of friction modifying materials provides the friction material with good anti-shudder characteristics. In the embodiment shown, the high temperature synthetic fibers and porosity of the fibrous base material provides improved heat resistance.

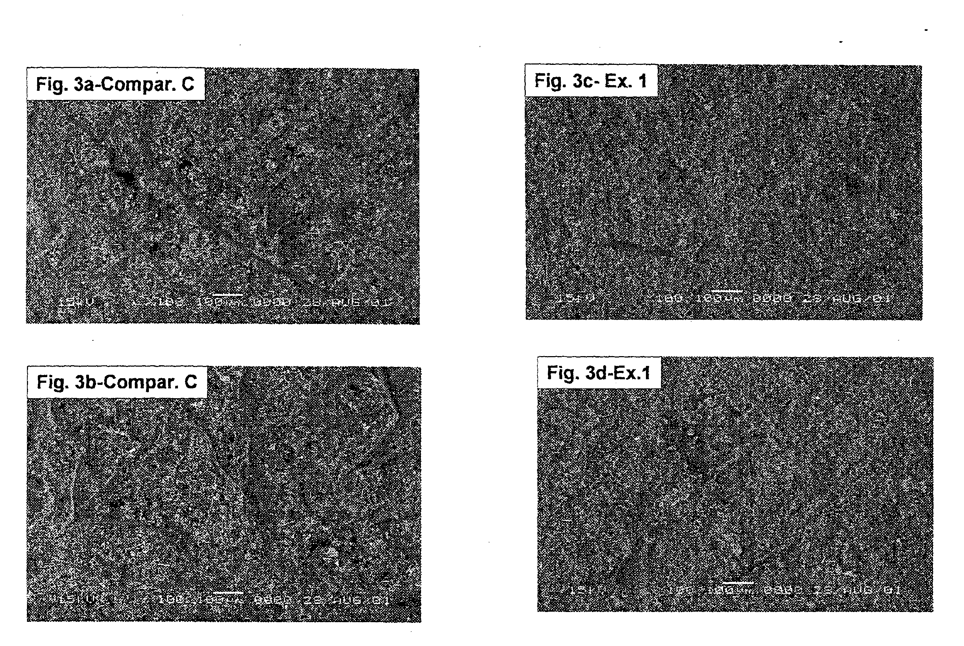

The SEM photographs in Figs. 3a-3b of the Compar. C material show incomplete coverage of the fibrous base material. In contrast, the SEM photographs in Figs. 3c-d of the Example 1 show a smoother surface and a nearly complete coverage of the fibrous base material.

A wet start clutch evaluation was conducted (4000 cycles, 950kPa, 2100rpm). for Ex. 1 and Compar. C.

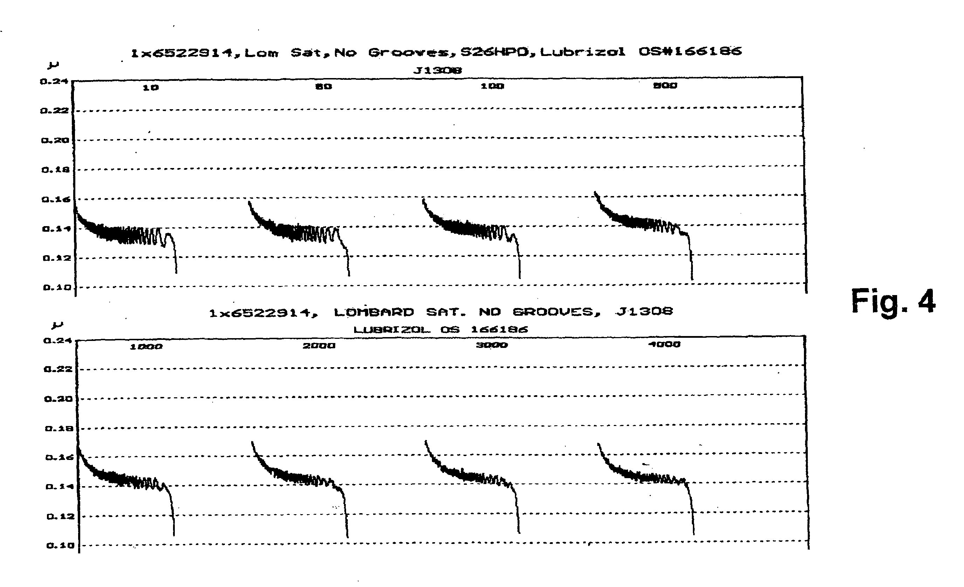

Fig. 4 shows the engagement curves at 10, 50, 100, 500, 1000, 2000, 3000 and 4000 cycles for the comparative example C (Compar. C) which are smooth and descending curves. The Compar. C has a coefficient of friction of about 0.14.

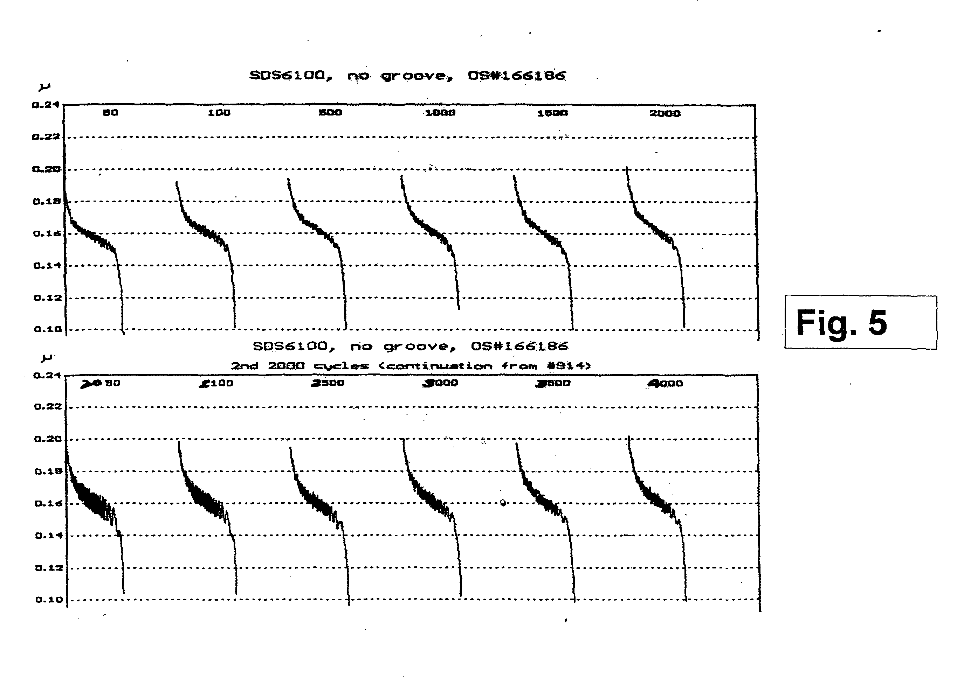

Fig. 5 shows engagement curves at 10, 50, 100, 500, 1000, 2000, 3000 and 4000 cycles for the Ex. 1 of the present invention which are also smooth, but more sharply descending. The difference in curve shapes between Fig. 4 and Fig. 5 clearly shows the higher coefficient and shows that the µ-v slope is positive. The coefficient of friction increases up to about 0.16.

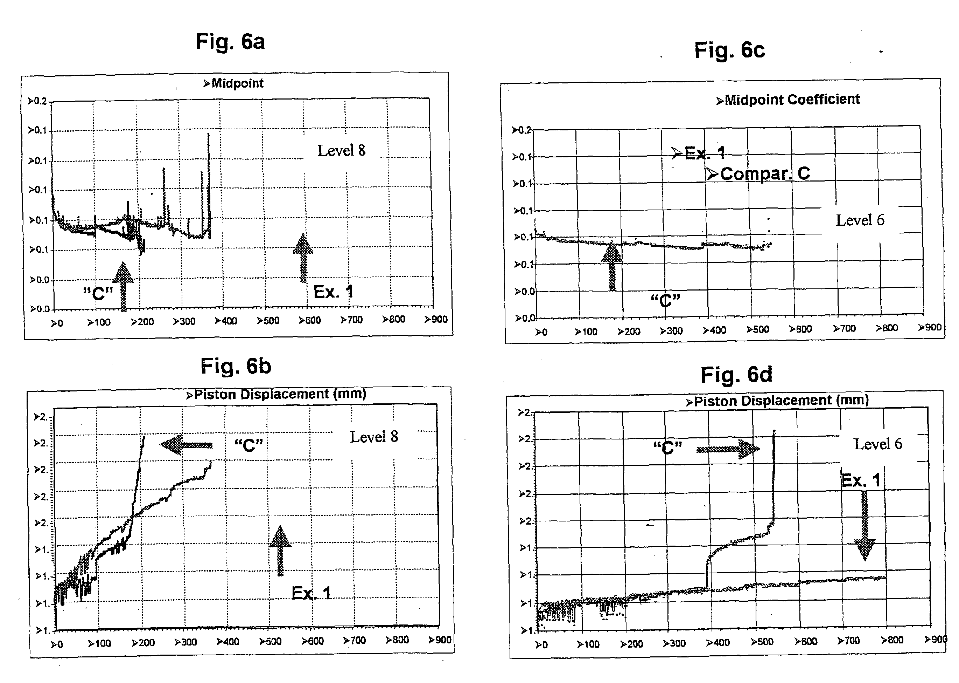

Figs. 6a-6d show the TN midpoint coefficient results of the Compar. 1 and Ex. 1 in ungrooved plates for shifting clutch at 6000 rpms. This is a durability-high energy test. As shown in the Figs., the Ex. 1 has a durability of over 7000 cycles while Compar. C fails early in the experiment due to thickness changes in the friction material. The Ex. 1 material of the present invention shows no rapid change in thickness and is more stable. This characteristic is important in shifting clutches and in other applications where for example, it is not desirable to have the piston travel a different distance than originally engineered.

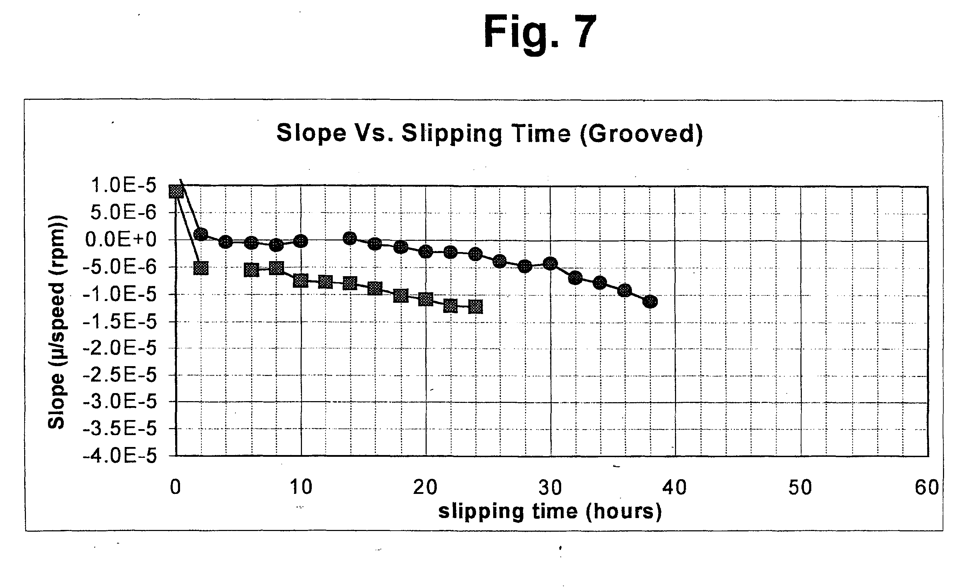

A comparison of slope v. slipping time in grooved materials for the Ex. 1 and the Compar. C is shown in Fig. 7. The failure criterion of mu-v (friction coefficient to slip speed (rpm)) slope is set at -1.0*E-5, which is acceptable in the industry. A product with a slope below this level is more prone to shudder. The Ex. 1 material allows the oil flow to be within the desired conditions and allows for good dissipation of heat.

The deposit of the friction modifying particle creates a dense surface layer which reduces permeability of the top layer. In certain embodiments, the friction material of the present invention has a permeability that is lower in both the radial direction (i.e., direction parallel to a plane defined by the top, or friction modifying particle layer and in the normal direction (i.e., a direction perpendicular to the plane defined by the top layer) than the radial and normal permeabilities of the first, or fibrous base material, layer. The lower permeability of the top friction modifying particle layer holds the fluid or lubricant at the surface of the friction material.

The friction material has a normal permeability (kₙₒᵣₘₐₗ) of about 0.03 Darcy of less and a lateral permeability (kₗₐₜₑᵣₐₗ) of about 0.03 Darcy or greater. In embodiments where the friction modifying particles comprise celite, the celite has micropores which aid in holding the lubricant at the surface due to the capillary action of the lubricant in the micropores. In particular, various types of celite, such as diatomaceous earth, have irregular shapes and rough or invaginated surfaces which further aid in holding the lubricant at the surface. Thus, the ratio of top friction modifying particle layer radial permeability to fibrous base layer radial permeability is less than 1 and the ratio of top, friction modifying particle layer normal permeability to fibrous base layer normal permeability is less than 1.

### Example II

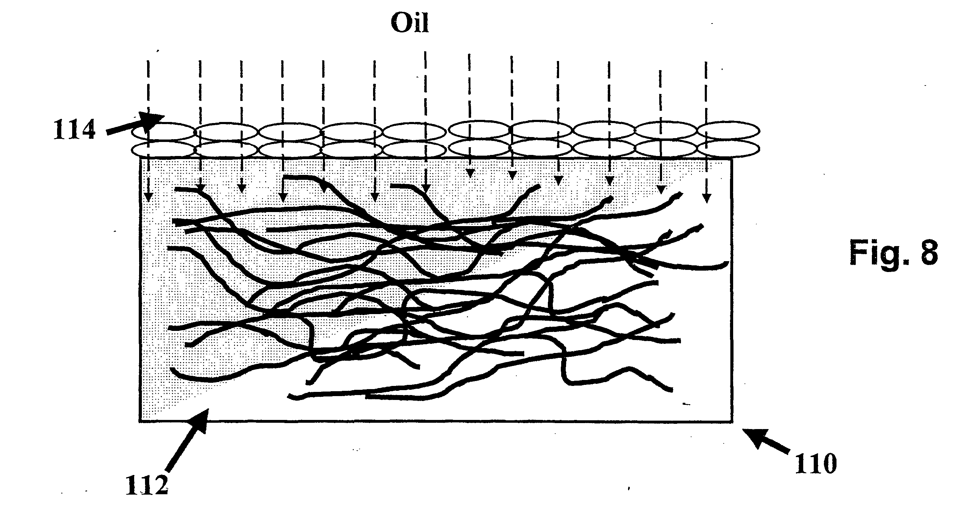

Fig. 8 shows a schematic diagram of a friction material 110 impregnated with a saturant of the present invention comprising a base material 112 and a layer of regular geometrical shaped surface friction modifying materials 114 substantially covering the base material 112.

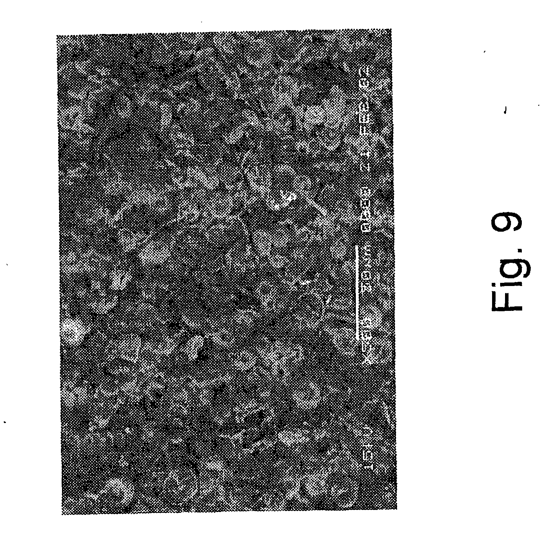

The layer of friction modifying materials used in the saturant of the present invention provides the friction material with good anti-shudder characteristics. In the embodiment shown, the high temperature synthetic fibers and porosity of the base material provides improved heat resistance. Example 2, shown in Fig. 9, is a friction material saturated with a saturant of the present invention where a layer of the regular shaped friction modifying particles is formed on a top surface of the base material. The round disk celite layer provides improved oil retention.

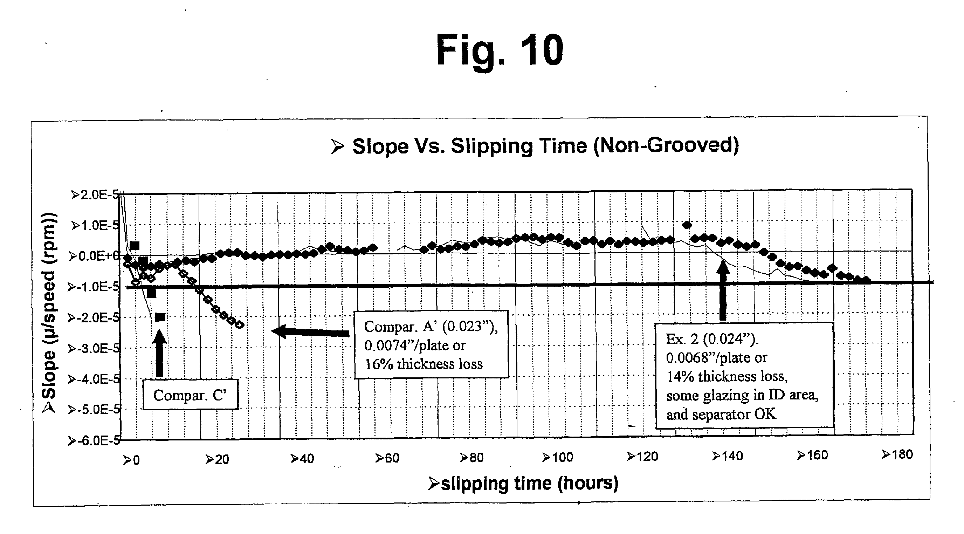

Fig. 10 is a graph of a slip durability test showing the slope versus slipping time for Ex. 2; Compar. A' which contains about 20 to about 40% celite and about 1 to 10%, based on the basis weight of the paper, of celite as a top, or secondary layer; and Compar. C' which comprises a single layer material of about 40 to about 60% celite and 40 to about 60 % organic fibers. In contrast, the Ex. 2 has a more effective deposit of the friction modifying particles on the surface of the base material. Only a negligible amount of the friction modifying particles on the top surface of the Ex. 2 friction material penetrate in the base, or primary, layer. The symmetrical shaped friction modifying particles stack or pile up on the base material to form a good layer of a "mountain and valley" type of three-dimensional structure. This three-dimensional structure creates positive friction behavior for the friction material of the present invention, including good oil flow or lubrication, good positive µ-v slopes, and good durability. While not wishing to be bound by theory, it is believed that the new material has a better three-dimensional structure and better characteristics since the symmetrical shaped friction modifying particles stay on the friction surface, the supporting fibers and filler remain in the base material.

The slope versus slipping time of Ex. 2 has a longer life than the comparative examples. It is to be noted that the slope (µ-speed) of -1 x 10⁻⁵ is acceptable in the industry. Any product having a slope below level that does not have the desired coefficient of friction characteristics. The Ex. 2 material allows the oil flow to be within the desired conditions and allows for good dissipation of heat.

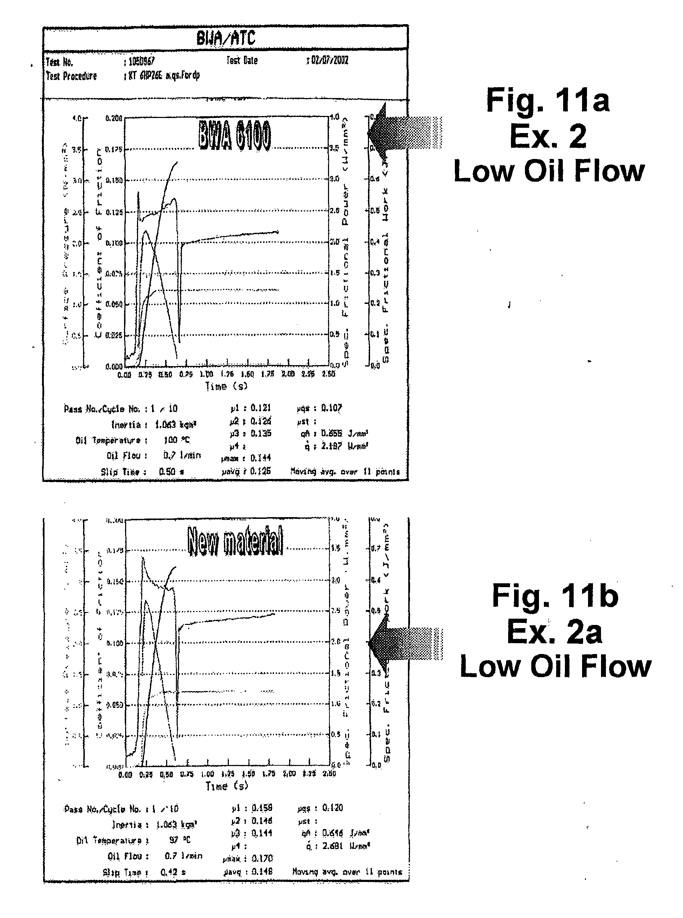

Figs. 11 a and 11 b show the results of an "E" clutch bench test were conducted for Compar. A' and Ex. 2 for low oil flow. Both examples have improved anti-shudder characteristics and that both are improved materials with non-squawk.

Figs. 11 a and 11 b show ascending or rooster tailed torque curve for the Compar. C' versus a descending torque curves for the Ex. 2. The Compar. C' curves have negative µ -v slope in the whole speed range while the Ex. 2 curves have positive µ -v slopes in the whole speed range. The positive µ -v slopes are preferred and necessary for a smooth clutch operation (engagement or slipping).

The condition shown in Figs. 11 a and 11 b is very special for a shifting clutch. This clutch connects to a long shaft and operates in a low lubrication situation. The operating condition is severe (high energy, low lubrication engagement) and is sensitive to vibration (due to the long shaft connection). Any ascending torque curve for this clutch results in noise (squawk) and vibration, such as shown in Fig. 11a. The vehicle, or Dyno, test can easily reveal the torque vibration for this condition. The Ex. 2 shows how these obstacles are overcome, as shown by Fig. 11 b.

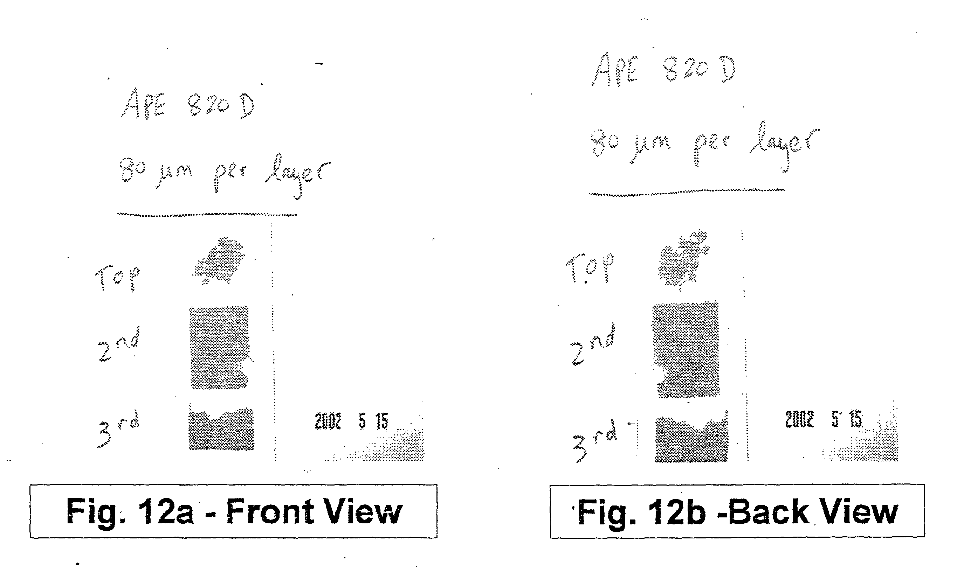

The Figures 12a-12b show the thickness of the deposit layer as being about 80 µm. The distinct layer of the deposit particles is also shown. For 80 µm per layer cut, the front and back view of the top layer show yellow/brown color, that is exactly the deposit layer color. The front view of the second layer in this Figure (12a - 12b) reveals the green color of the base material. By combining the top and second layer images in the front and back view, it is clearly shown that the deposit layer thickness is about 80 µm (the thickness of the cut).

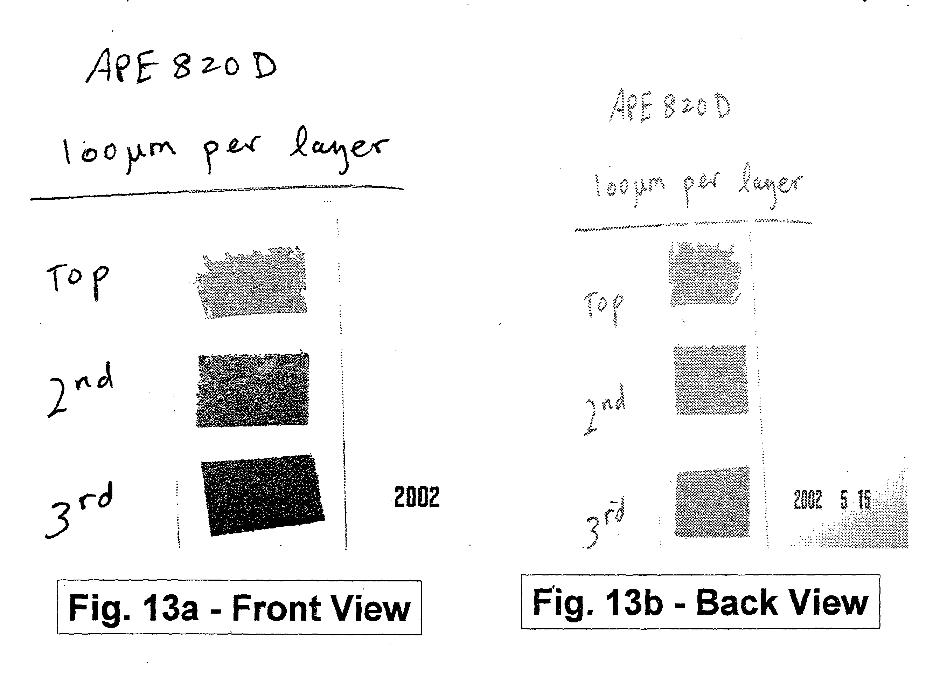

In Figs. 13a-13b, the top layer shows yellow/brown color (which is always the case since this is the friction surface composed of Celite particles and resin), while the back view shows green color (this is the color of the base material). The different color on front view and back view shows that the 100µm (per layer cut) is more than the thickness of the deposit layer.

These two sets of Figs (12a-b and 13a-b) demonstrate the deposit layer thickness to be about 80 µm. The revealed color contrast between deposit layer and base material is more evidence of the existence of deposit layer.

The deposit of the friction modifying particle creates a dense surface layer which reduces permeability of the top layer. In certain embodiments, the friction material saturated with the saturant of the present invention has a permeability that is lower in the normal direction (i.e., direction perpendicular to the plane defined by the top layer, than the normal permeability of the first or base material layer.

The lower normal fluid permeability of the top layer together with the micro hard solid regular mountain-valley type surface topography cause the oil to remain on the friction surface and create channels of oil flow across the friction surface. An effective surface cooling mechanism and constant surface lubrication is then achieved. This unique feature from the unique surface structure makes the friction material saturated with the saturant of the present invention very durable in slipping clutch applications. In addition, the symmetric round shape of the modifying particles provides a much less abrasive wear than the other irregular shapes of particles.

### Example III

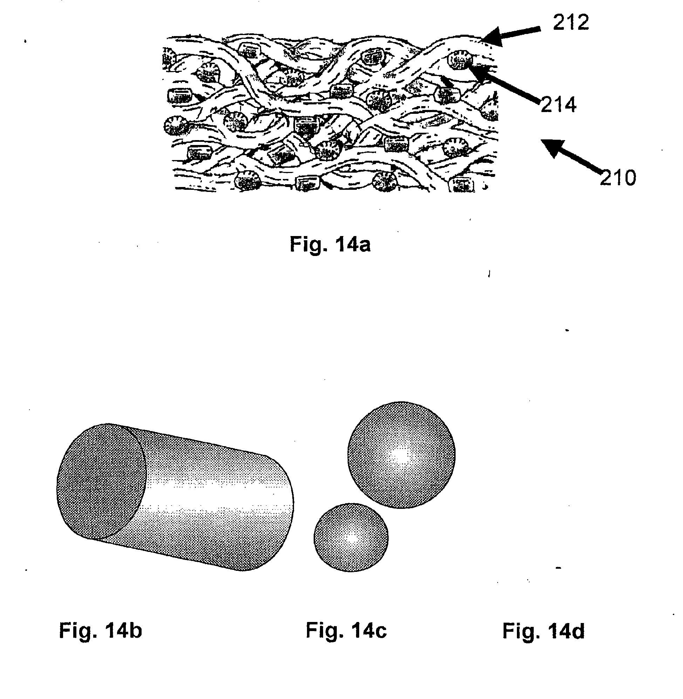

Fig. 14a is a schematic diagram showing a prior art friction material 210 having a fibrous base material 212 and diatom friction modifying particles 214. The Figs. 14b, 14c and 14d are schematic illustrations showing a comparison between the sizes of the fibers (fig. 14b), the conventional silica particles (fig. 14c), and the nanoparticles used in the present invention (figs. 14d).

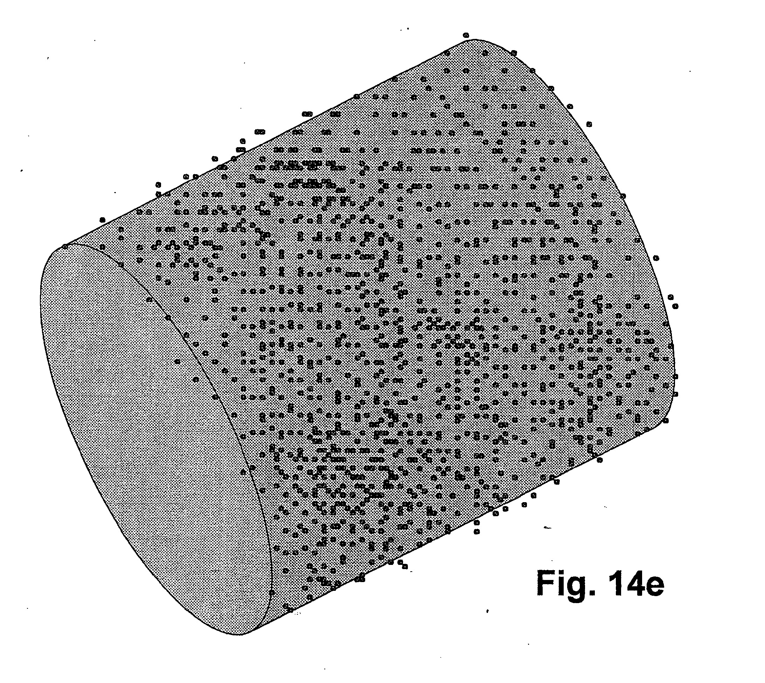

Fig. 14e is a schematic illustration of a fiber having nanoparticles on the surface of the fiber.

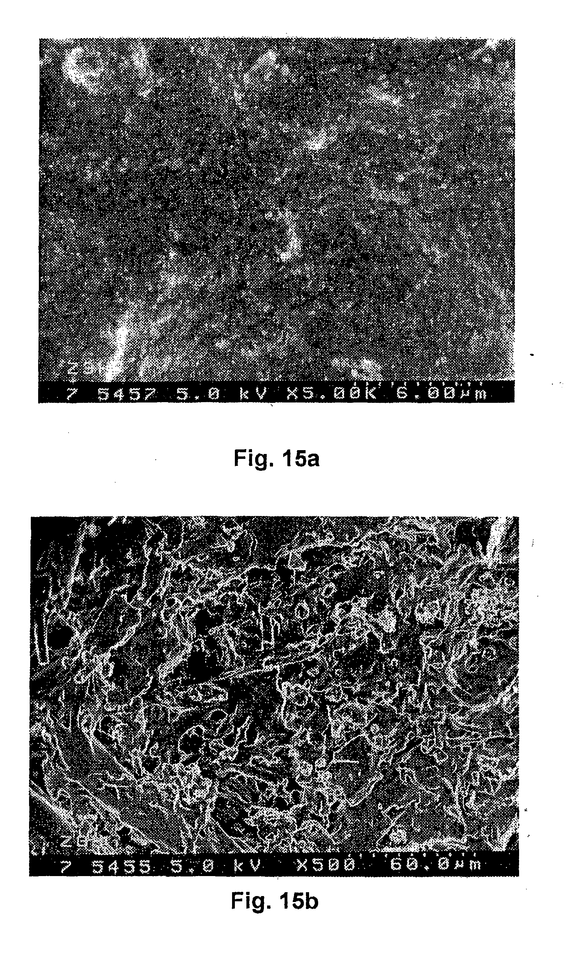

Fig. 15a is a SEM image of a nanoparticle friction material in the saturant of the present invention at 5000 magnification; Fig. 15b is a SEM image of a nanoparticle-saturated friction material invention at 500 magnification.

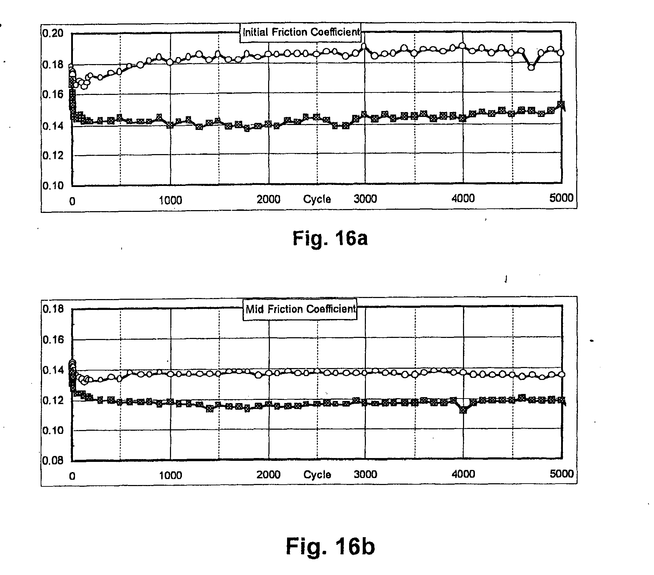

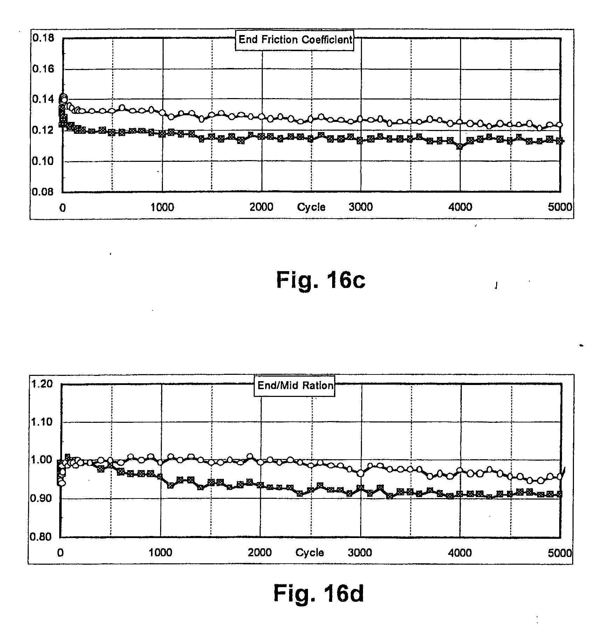

Figs. 16a-16d are a series of graphs showing wet start clutch bench evaluations at cycles 10, 50, 100, 500, 1000, 2000, 3000, and 4000 for the friction material of the present invention (open circle line: Example 3 (showing one optimized concentration of nanoparticles on surface) and square shape line: comparative friction material): Fig. 16a- initial friction coefficient; Fig. 16b - mid friction coefficient; Fig. 16c - end friction coefficient; Fig. 16d - end/mid ratio. The difference in curve shapes between the open circle shape line (present invention) and square shape line (prior art material) clearly shows the higher coefficient and shows that the µ-v slope is positive.

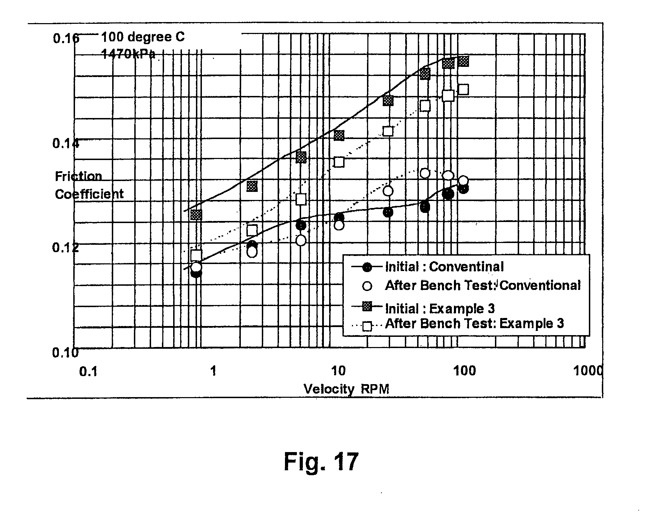

Fig. 17 is a graph showing S31 Test Results comparing the friction coefficient versus velocity (rpm) for: initial coefficient-comparative material (closed circle); initial coefficient - Example 3 (closed square); after bench test - comparative material (open circle); and, after bench test - Example 3 (open square).

The slope versus slipping speed for the grooved material shows that the Ex. 3 has a longer life. The slope (u-speed) of -1 x 10⁻⁵ is acceptable in the industry. Any product below level that does not have the desired coefficient of friction characteristics. The Ex. 3 material allows the oil flow to be within the desired conditions and allows for good dissipation of heat.

In certain embodiments, the deposit of the nanoparticle-sized friction modifying particle using the saturant of the present invention creates a dense surface layer which reduces permeability of the top layer. In certain embodiments, the friction material saturated with a saturant of the present invention has a permeability that is lower in both the radial direction (i.e., direction parallel to a plane defined by the top, or friction modifying particle layer and in the normal direction (i.e., a direction perpendicular to the plane defined by the top layer) than the radial and normal permeabilities of the first, or base material layer. The lower permeability of the top friction modifying particle layer holds the fluid or lubricant at the surface of the friction material.

In embodiments where the nanoparticles of friction modifying particles comprise silica, the silica particles have micropores which aid in holding the lubricant at the surface due to the capillary action of the lubricant in the micropores. In particular, various types of celite, such as diatomaceous earth, have irregular shapes and rough or invaginated surfaces which further aid in holding the lubricant at the surface. Thus, the ratio of top friction modifying particle layer radial permeability to base layer radial permeability is less than 1 and the ratio of top, friction modifying particle layer normal permeability to base layer normal permeability is less than 1.

### INDUSTRIAL APPLICABILITY

The present invention is useful as a high energy friction material for use with clutch plates, transmission bands, brake shoes, synchronizer rings, friction disks or system plates.

The above descriptions of the preferred and alternative embodiments of the present invention are intended to be illustrative and are not intended to be limiting upon the scope and content of the following claims.

## Claims

1. A saturant for a base material for a friction material comprising at least one type of curable resin material and at least one type of friction modifying material wherein the resin material and the friction modifying material form a matrix such that the resin material is substantially uniformly dispensed throughout the base material and a plurality of the friction modifying materials are at least partially coated on at least a first surface of the base material.

2. The saturant of claim 1, wherein the saturant comprises suitable friction modifying particles which reduce permeability and increases the oil retention of the base material.

3. The saturant of claim 1 or 2, wherein the saturant comprises friction modifying particles which cover about 60% to about 90% of the surface area of the base material.

4. The saturant of claim 1, 2 or 3, wherein the saturant comprises friction modifying particles present at about 0.2 to about 20%, by weight, based on the weight of the saturant.

5. The saturant of claim 4, wherein the saturant comprises friction modifying material present at about 0.5 to about 10%, by weight, based on the weight of the saturant.

6. The saturant of claim 1, 2 or 3, wherein the saturant comprises friction modifying particles present at about 15% to about 20%, by weight, based on the weight of the saturant.

7. The saturant of any one of claims 1 to 6, wherein the saturant comprises friction modifying particle size ranges from about 0.5 to about 20 microns.

8. The saturant of any one of claims 1 to 6, wherein the saturant comprises at least one type of nanoparticle-sized friction modifying particle having a thickness of about 10 nm to about 250 µm.

9. The saturant of any one of claims 1 to 8, wherein the saturant comprises friction modifying particles comprise at least one of silica, alumina, carbon particles and mixtures thereof.

10. The saturant of any one of claims 1 to 8, wherein the saturant comprises friction modifying particles comprising diatomaceous earth.

11. The saturant of any one of claims 1 to 8, wherein the saturant comprises friction modifying particles comprise celite particles.

12. The saturant of claim 11, wherein the saturant comprises celite particles having an irregular shape.

13. The saturant of any one of claims 1 to 12, wherein the saturant comprises friction modifying particles having at least one type of substantially symmetrical geometric shape geometry comprising shapes of substantially round disc, cylinders, rods, fibers, and mixtures thereof.

14. The saturant of claim 13, wherein the saturant comprises friction modifying particles comprising substantially disc-shaped celite.

15. The saturant of any one of claims 1 to 14, wherein the saturant comprises suitable friction modifying materials such that friction modifying particles are deposited on the first surface of the base material to a depth of about 35-45 µm.

16. The saturant of any one of the preceding claims, wherein the saturant comprises at least one phenolic resin or a modified phenolic resin.

17. The saturant of any one of claims 1 to 15, wherein the saturant comprises a mixture of a phenolic resin and a silicone resin wherein the amount of silicone resin in the resin mixture ranges from approximately 5 to approximately 80%, by weight, based on the weight of the resin mixture.

18. The saturant of claim 17, wherein the phenolic resin is present in a solvent material and the silicone resin is present in a solvent material which is compatible with the solvent material of the phenolic resin.

19. The saturant of claim 17 or 18, wherein the amount of silicone resin present in the silicone-phenolic resin mixture ranges from about 15 to about 25%, by weight, based on the weight of the mixture.

20. The saturant of claim 16, wherein the modified phenolic resin comprises an epoxy phenolic resin.

21. The saturant of claim 20, wherein the amount of epoxy resin present in the epoxy phenolic resin ranges from about 5 to about 25%, by weight, based on the weight of the epoxy phenolic resin.

22. The saturant of claim 20, wherein the amount of epoxy resin present in the epoxy phenolic resin ranges from about 10 to about 15%, by weight, based on the weight of the epoxy phenolic resin.

23. A friction material impregnated with the saturant of any one of the preceding claims, wherein the friction material comprises a nonwoven fibrous material.

24. A friction material impregnated with the saturant any one of claims 1 to 22, of wherein the friction material comprises a woven fibrous material.

25. A friction material impregnated with the saturant of any one of claims 1 to 22, wherein the friction material comprises a suitable base material having a plurality of fibers and at least one type of filler material such that the friction modifying particles at least partially adhere to a suitable amount of fibers and fillers in the base material.

26. A friction material impregnated with the saturant of any one of claims 1 to 22, wherein the friction material comprises a base material having an average voids volume of about 65% to about 85%.

27. A friction material impregnated with the saturant any one of claims 1 to 22, wherein the friction material comprises a plurality of fibers such that friction modifying particles, at least partially adhere to the fibers comprising the base material.

28. A friction material impregnated with the saturant of any one of claims 1 to 22, wherein the friction material comprises from about 15 to about 25% cotton, about 40 to about 50% aramid fibers, about 10 to about 20% carbon fibers, about 5 to about 15% carbon particles, about 5 to about 15% celite, and, optionally about I to about 3% latex add-on.

29. A method for producing a friction material comprising
saturating base material with a saturant of claim 1, wherein the saturant comprises at least one resin material and at least one type of friction modifying particles, the friction modifying particles being present at about 0.2 to about 20%, by weight, based on the weight of the saturant such that a plurality of friction modifying particles form at least a partial coating of friction modifying material on a first surface of the base material while the resin is substantially homogeneously dispensed throughout the resin, and
curing the saturated base material at a predetermined temperature for a predetermined period of time.
